# EUROPEAN PATENT SPECIFICATION

(11) **EP 2 051 480 B1**
(45) Date of publication and mention of the grant of the patent: **16.12.2009**
(21) Application number: 07118909.6
(22) Date of filing: 19.10.2007
(51) Int. Cl.: H04L 29/08

(54) **Mechanism for publishing presence information within a presence service and user interface for configuring same**
Mechanismus zur Ausgabe von Präsenzinformationen innerhalb eines Präsenzdienstes und Benutzerschnittstelle zu dessen Konfiguration
Mécanisme pour la publication d'informations de présence dans un service de présence et interface utilisateur pour sa configuration

(43) Date of publication of application: 22.04.2009
(73) Proprietor: Research In Motion Limited, Waterloo, Ontario N2L 3W8 (CA)
(72) Inventor: Son, Giyeong, Mississauga Ontario L5M 5G4 (CA); Preiss, Bruno R., Waterloo Ontario N2T 1R1 (CA); Lewis, Allan, New Dundee Ontario N0B 2E0 (CA)
(74) Representative: MERH-IP Matias Erny Reichl Hoffmann

(56) References cited:
- US-A1- 2007 182 541
- IETF-NETWORK WORKING GROUP: M DAY ET AL: "Request for Comments (RFC) 2778: A model for Presence and Instant Messaging" INTERNET CITATION, [Online] XP002201444 Retrieved from the Internet: URL:http://www.ietf.org/rfc/rfc2778.txt> [retrieved on 2002-06-07]
- "Universal Mobile Telecommunications System (UMTS); Presence service; Architecture and functional description; Stage 2 (3GPP TS 23.141 version 7.2.0 Release 7)" 20060901; 20060900, 1 September 2006 (2006-09-01), pages 1-38, XP014035459
- 3GPP: "Technical Specification Group Core Network; Presence service based on Session Initiation Protocol (SIP); Functional models, information flows and protocol details (3GPP TR 24.841 Release 6)"[Online] June 2004 (2004-06), pages 1-150, XP002482207 Retrieved from the Internet: URL:http://www.3gpp.org/ftp/Specs/archive/ 24%5Fseries/24.841/> [retrieved on 2008-05-28]

## Description

The present disclosure relates generally to presence services, and more particularly to a mechanism for publishing presence information within a presence service and a user interface for configuring same.

In computing, a presence service is a network service which accepts, stores and distributes presence information. Presence information is generally defined as information regarding the availability, willingness or capacity of a user for communication, e.g. by way of a communication system with which the presence service is associated. The communication system may for example be an instant messaging (IM) system or computer-based Voice over IP (VoIP) telephony system. In a typical arrangement, each user executes a software-based presence service client (a form of "presence user agent") that is associated with, and in many cases integrated with, a communication system client (e.g. an IM client executing on an internet-connected personal computer). The presence service client may permit a presence user (the user of the presence service) to see whether other presence users in a user-specified set of contacts, commonly known as a "contact list", "buddy list" or "friend list", are currently on-line and available for communication. The availability of each contact may be indicated by way of a presence indicator such as "available", "busy", "idle", "do not disturb", or "out to lunch" for example. The current value of the presence indicator is based on presence information received from the presence service client of the contact. To keep these indicators substantially up to date, when a contact's presence service client detects that the value of its presence information has changed, it automatically reports ("publishes") the changed information to other users of the presence service. Publishing is typically done by way of a central presence server. Specifically, an update regarding the changed presence information is sent to the presence server, which in turn relays the changed presence information to all connected users who have elected to receive such updates regarding that contact (i.e. have "subscribed" to the presence information of that contact). The presence service client of the contact which publishes the changed presence information is referred to as a presence entity or "presentity". The presence service clients of the subscribing presence users who receive these updates are referred to as "watchers".

A contact's presentity may publish its presence information according to a publish/subscribe model or a request-based model (each constituting a different "publishing mechanism"). In the publish/subscribe model, the presentity automatically publishes its presence information regardless of whether any watchers have subscribed to that presence information. For example, in a presence service having a central presence server, the presentity apprises the presence server every time that the presentity's presence information changes. If no watchers have subscribed to that presence information, that information is not relayed to any watchers. Thus, in the absence of any subscribed watchers, the periodic publication of changed presence information by the presentity is, disadvantageously, wasteful of bandwidth between the presentity and the presence server, since there are no consumers of that information. The amount of wasted bandwidth may be particularly high when the size of the presence information is large or when the frequency of updates is high. Wasted bandwidth may disadvantageously increase service charges in the case where such charges are based, at least in part, on the amount of the bandwidth consumed. Another shortcoming associated with the publish/subscribe model can arise when the presentity restricts the set of presence information that it publishes over time. For example, a presentity may initially publish presence information comprising two presence attributes: user status (e.g. "do not disturb", "out to lunch", etc.) and device status (e.g. "in coverage range", "out of coverage range", - these values assume that the presence service client executes on a wireless communication device that may occasionally be out of wireless network coverage). Later, the presentity may unilaterally decide to cease publishing device status information. Because the presentity does not know which watchers, if any, have subscribed to its presence information nor which attributes have been subscribed to, it has no way of knowing whether any watchers will be impacted by this decision. If any watchers have subscribed to a presence attribute that ceased being published, the watcher may fail to appreciate why the delivery of updates regarding the relevant presence indicator has suddenly ceased.

In the request-based model, the presentity only publishes its presence information if at least one watcher has subscribed to that presence information. Moreover, it only publishes the presence attributes to which at least one watcher has subscribed. For example, the presence information of a presentity may include two presence attributes, user status and device status, as described above. A watcher may subscribe to only the user status presence attribute but not the device status presence attribute. The presentity is apprised of this subscription, as it is apprised of all subscriptions to any of its presence attributes. If the watcher is the first to subscribe to any presence attribute of the presentity, the subscription causes the presentity to begin publishing only the presence attribute of interest (i.e. user status). Publishing may entail apprising a central presence server every time the presence attribute changes. If another watcher later subscribes to only the other presence attribute, the presentity is apprised of that subscription as well and, in response, now begins publishing the device status attribute in addition to the user status attribute. It should be noted that the presence server sends presence updates to each subscriber regarding only the presence attribute(s) of interest to that subscriber, e.g. regarding only user status attribute to the first subscriber and regarding only the device status attribute to the second subscriber. Because the presentity publishes only the presence attributes to which at least one watcher has subscribed in the request-based model, less bandwidth is wasted between the presentity and the presence server than in the publish/subscribe model. However, the request-based model may have other shortcomings. For example, the worst-case latency between a watcher's subscription to a presentity's presence attribute and the watcher's receipt of the current value of that presence attribute may be higher than in the publish/subscribe model. This is by virtue of the fact that, if the watcher is the first subscriber to a presence attribute, publication of the present attribute does not commence until the presentity has been notified of the subscription. The notification step introduces delay in this scenario that may not exist in the publish/subscribe model. As well, the monitoring of watcher subscriptions in the request-based model generally increases system complexity as compared with the publish/subscribe model, in which watcher subscriptions are not monitored. The resultant additional system overhead at the presence server and presentity can negatively impact the performance, reliability and scalability of presence services using the request-based model.

US2007/182541 discloses publishing of presence attributes based upon watcher notification information.

An alternative mechanism for publishing presence information would be desirable.

### GENERAL

In one aspect of the present embodiment, there may be provided a method of publishing presence information of a presentity within a presence service, the presence information including a first presence attribute and a second presence attribute, the method may comprise: publishing the first presence attribute within the presence service only if at least one watcher within the presence service has subscribed to the first presence attribute; and further publishing the second presence attribute within the presence service regardless of whether any watcher within the presence service has subscribed to the second presence attribute, said publishing and said further publishing both occurring during a connection of said presentity with said presence service.

In another aspect of the present embodiment there may be provided a machine-readable medium storing instructions which, when executed by a processor of a computing device, cause said computing device to perform the steps of the foregoing method.

In another aspect of the present embodiment there may be provided a computing device comprising: a processor; and memory storing executable instructions which, when executed by said processor, adapt said computing device to perform the steps of the foregoing method.

Other features and aspects of the invention will be apparanet from the appended claims.

### BRIEF DESCRIPTION OF DRAWINGS

In the figures which illustrate an exemplary embodiment:

FIG. 1 is a schematic diagram of a presence service;

FIG. 2 is sequence diagram illustrating operation of the presence service of FIG. 1;

FIG. 3 is an illustration of a graphical user interface used to configure the publication of presence information within the presence service of FIG. 1;

FIG. 4 is an illustration of a markup language document used to capture the presence information format and the user-configured publication mechanism for each presence attribute of a presentity within the presence service of FIG. 1; and

FIGS. 5 and 6 are illustrations of communications from a presentity to a presence server within the presence service of FIG. 1.

### DESCRIPTION OF PREFERRED EMBODIMENTS

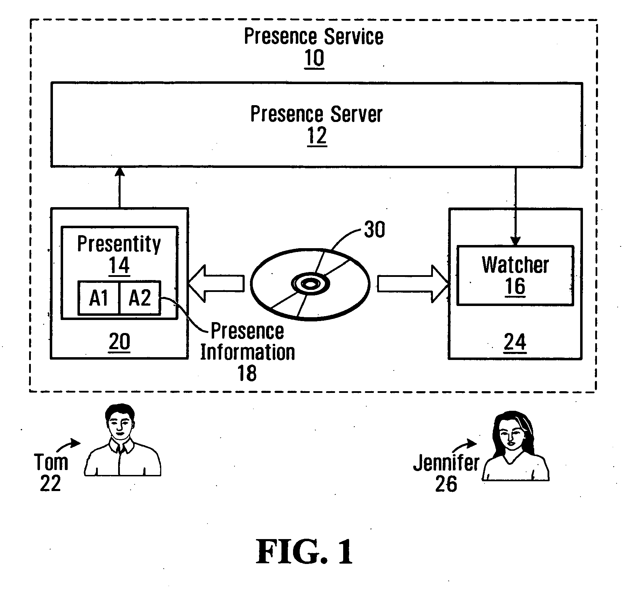

FIG. 1 is a schematic diagram illustrating an exemplary presence service 10. The presence service 10 includes a presence server 12, a presentity 14 executing on a first computing device 20, and a watcher 16 executing on a second computing device 24. The presentity 14 is controlled by a first presence service user 22 ("Tom") while the watcher is controlled by a second presence service user 26 ("Jennifer"). The purpose of the presence service 10 is to accept, store and distribute presence information between presence service users. For simplicity, only the acceptance, storing and distribution of presence information 18 from presentity 14 to watcher 16 is described. It will be appreciated that the same approach may be used to distribute presence information of numerous presentities to numerous watchers within the presence service.

As shown in FIG. 1, the exemplary presence information 18 comprises two presence attributes, A1 and A2, (also referred to simply as "attributes") which are described in more detail below. In conventional presence services, the attributes A1, A2 comprising presence information 18 would both be published (i.e. made available to watchers within a presence service) using the same publication mechanism. For example, the attributes would both be published according to the publish/subscribe model, or they would both be published according to the request-based model. The instant presence service 10 differs from such conventional presence services, however, in that the mechanism used to publish attributes A1 and A2 is configurable on a per-attribute basis. For example, attribute A2 can be published according to the publish/subscribe model, while attribute A1 is published according to the request-based model, as described hereinafter.

In the illustrated embodiment, presentity 14 and watcher 16 are each understood to be components of a software application, which is referred to as a presence service client. As is typical, one instance of the presence service client is executed at computing device 20 while another instance of the same presence service client is executed at computing device 24. For clarity, only the presentity component is shown at computing device 20 and only the watcher component is shown at computing device 24. The presence service clients may be subsumed within communication system clients, such as IM clients for example.

In the illustrated embodiment, each computing device 20, 24 executing presence service client software is a wireless communication device, such as a two-way pager, personal digital assistant (PDA), cellular phone, smart phone, portable computer or the like. Each wireless communication device includes a processor interconnected with memory, an input device (e.g. a keypad or keyboard), and an output device such as a liquid crystal display, none of which are expressly illustrated in FIG. 1. The presence service client software may be loaded into the memory of the devices 20, 24 by way of over-the-air (OTA) transmission for example. The software may originate from a machine-readable medium 30, such as an optical disk or magnetic storage medium. As will be appreciated, the capacity to configure the mechanism for publishing presence information i.e. on a per-attribute basis is effected within software 30 of the present embodiment.

Each wireless communication device 20, 24 includes a communication subsystem comprising a receiver, a transmitter, and one or more antennas (not expressly shown). The communication subsystem permits the device to communicate with presence server 12 over a wireless data network. The wireless network communication may be relayed over a conventional wired data network via a gateway, in order to arrive at presence server 12, however this is not a central aspect of the present description. The specific design and implementation of the communication subsystem at the wireless communication devices 20, 24 is dependent upon the wireless network over which the wireless communication device is intended to communicate (e.g. Mobitex™, DataTAC™ or General Packet Radio Service (GPRS) mobile data communication networks).

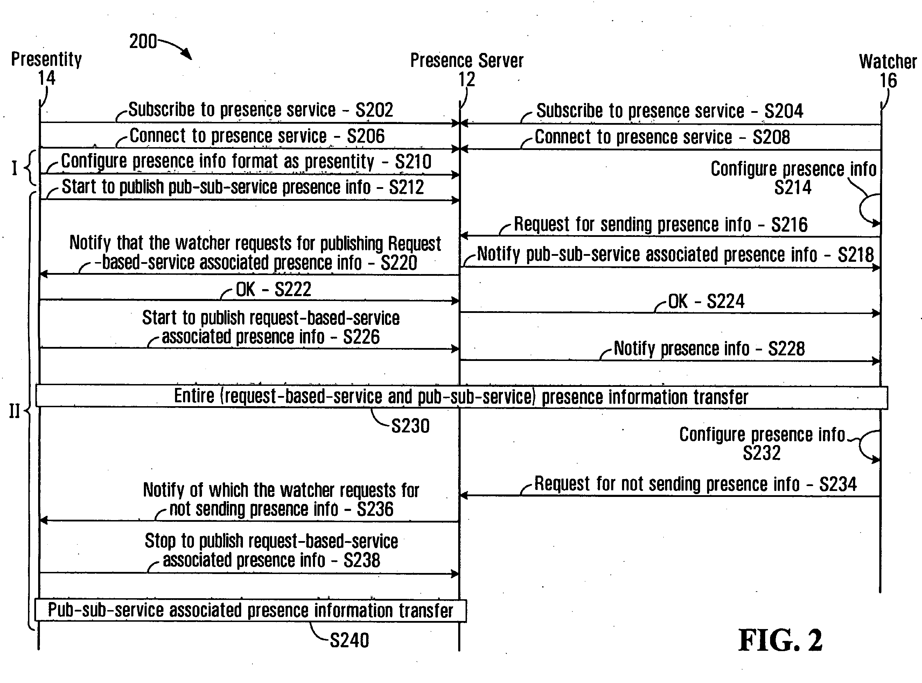

Operation of the present embodiment is illustrated in FIG. 2. A sequence diagram 200 illustrates intercommunication between the presentity 14, presence server 12 and watcher 16 of presence service 10 during two phases of operation. In the first phase of operation ("phase I"), the user 22, Tom, configures the publication mechanism for each presence attribute A1, A2 of presentity 14. In the second phase (phase II), the presentity 14 publishes presence attributes A1 and A2 according to the publication mechanisms configured by Tom during phase I.

Referring to FIG. 2, initially the presentity 14 and watcher 16 subscribe to the presence service 10 (S202 and S204, respectively). In the case where the presence service is part of, say, an IM service, subscription may entail Tom and Jennifer each setting up an account with the IM service provider, possibly selecting a username and password in the process. For clarity, this type of "subscription" to a presence service by the two users is distinct from the previously referenced "subscription" to a particular presence attribute of a presentity by a watcher.

After both users have subscribed to the presence service, the presentity 14 and watcher 16 each connect to the presence service 10 (S206 and S208, respectively). In the case where presence service 10 is part of an IM service, connection may require Tom and Jennifer to each log into the IM service, e.g., by specifying the username and password chosen during subscription. It is noted that neither Tom nor Jennifer has yet indicated any desire to receive the presence information of the other.

At this stage Tom configures the format of the presence information 18 of presentity 14 by selecting the presence attributes that shall comprise that information (S210). This configuration constitutes operation of phase I. Configuration may be achieved by selecting the presence attributes A1, A2 from a set of all possible presence attributes which the presentity 14 could possibly share with other users. For example, Tom may select the presence attributes from a template provided by the provider of the presence service 10 (e.g. an IM service provider) through a GUI. Alternatively, a service provider or network operator could specify default presence attributes. The template may be a markup language document enumerating a variety of different presence attributes, which may be of the types listed in Appendix A.

In the present example, it is assumed that Tom selects two presence attributes to comprise presence information 18: user status (attribute A1) and communication status (attribute A2). These attributes are described in more detail below.

The user status attribute A1 reflects the willingness of Tom to communicate. In the present embodiment, this attribute includes both a textual willingness indicator (e.g. "available", "out to lunch", "do not disturb", etc.) and an icon visually reflecting the current willingness level.

The communication status attribute A2 indicates the current communication status of the computing device 20 at which presentity 14 of Tom executes. This attribute includes a device status indicator (e.g. "in coverage", "out of coverage", etc.) and location information, namely, latitude and longitude. Location information may be specific to embodiments in which the computing device upon which the presentity executes is wireless or portable, as in the present embodiment.

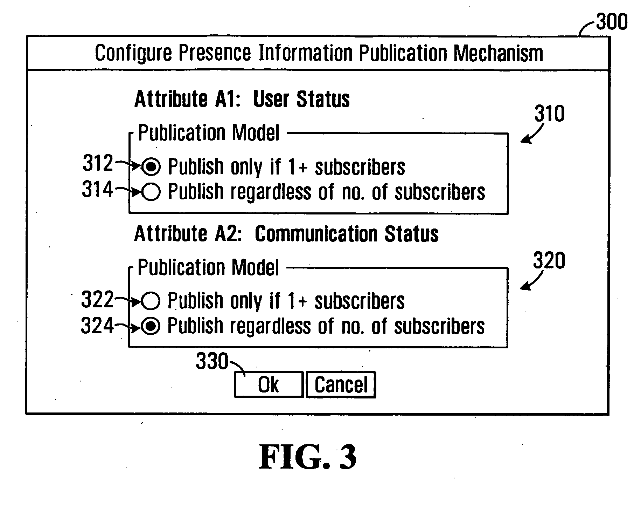

As part of operation S210, Tom also specifies a publication mechanism for each presence attribute that he has selected as part of his presence information 18, i.e., for each of presence attributes A1 and A2. In particular, Tom interacts with the presence service client software at computing device 20, using the input device of computer device 20, to cause the graphical user interface (GUI) 300 of FIG. 3 to be displayed on the display of computing device 20.

Referring to FIG. 3, GUI 300 includes two user interface controls 310 and 320, which in the present embodiment are two groups of radio buttons. The first radio button group 310 permits selection of the publication mechanism for presence attribute A1 while the second radio button group 320 permits selection of the publication mechanism for presence attribute A2. Each radio button group has two mutually exclusive options. In radio button group 310, a first radio button 312 is for configuring the presence service client software to cause presence attribute A1 to be published according to the request-based model, i.e. only if at least one watcher within the presence service 10 has subscribed to that presence attribute. A second radio button 314 is for configuring the presence service client software to cause presence attribute A1 to be published according to the publish/subscribe model, i.e. regardless of whether any watcher within the presence service 10 has subscribed to that presence attribute. Radio button group 320 similarly has two buttons 322 and 324, which are analogous to options 312 and 314, respectively, but pertain to presence attribute A2.

In the example of FIG. 3, it is assumed that Tom has selected button 312 of group 310 and button 324 of group 320. These selections represent a selection of the request-based model for attribute A1 and the publish/subscribe model for attribute A2. When the user confirms these selections, e.g. by way of an "OK" button 330, the settings become effective at the presentity 14.

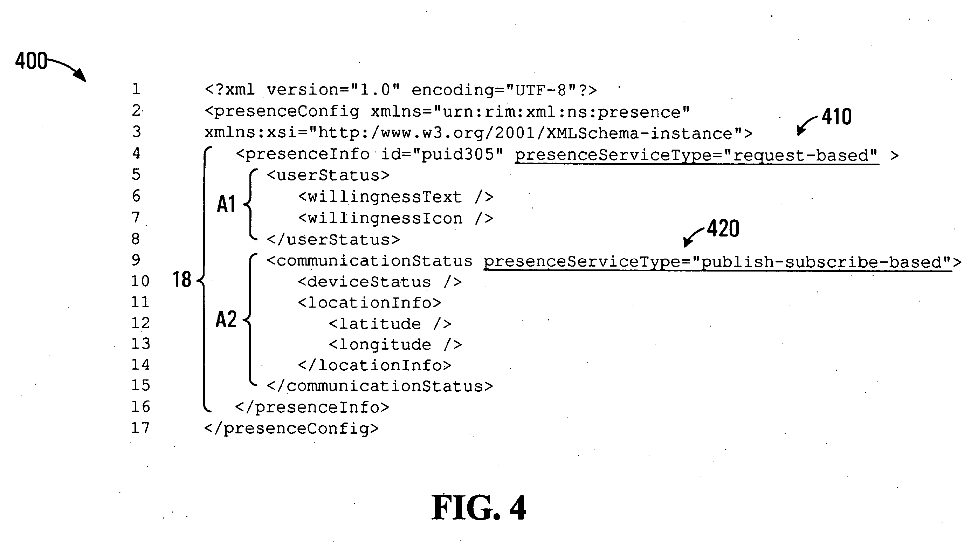

In the present embodiment, the presence information format and the user-configured publication mechanism for each presence attribute are captured within a single Extensible Markup Language (XML) document. FIG. 4 illustrates an exemplary XML document 400 used for this purpose. It should be noted that the XML document 400 illustrated in FIG. 4 may not be entirely syntactically and semantically correct but is nevertheless sufficient to convey, to a person of ordinary skill, an approach for representing presence information and attribute publication mechanism information using a markup language document.

Referring to FIG. 4, the XML document 400 includes a <presenceInfo> element which spans lines 4-16 of that figure. This element represents presence information 18 of FIG. 1. The <presenceInfo> element has two children elements, each representing a single presence attribute. The first child element, <userStatus>, which spans lines 5-8 of document 400, represents presence attribute A1. The second child element, <communicationStatus>, which spans lines 9-15 of document 400, represents presence attribute A2. Each child element further contains children elements representing sub-components of the individual presence attributes.

The exemplary XML document 400 of FIG. 4 adopts a particular approach for specifying the publication mechanism for each presence attribute A1, A2 comprising presence information 18. In particular, the <presenceInfo> element incorporates an attribute, presenceServiceType, whose value indicates a default publication model for all of the subordinate presence attributes comprising the presence information represented in document 400. If a subordinate presence attribute lacks any presenceServiceType attribute, it is assumed to utilize the default publication mechanism. For example, the lack of any presenceServiceType attribute in the <userStatus> presence attribute A1 at line 5 of FIG. 4 indicates that the default publication mechanism-the request-based model-is operative for presence attribute A1. However, the existence of an overriding presenceServiceType attribute for the <communicationStatus> presence attribute A2 at line 9 of FIG. 4 indicates that the publish/subscribe model is operative for presence attribute A2 (including any subcomponents). This is consistent with the user's choices in GUI 300 of FIG. 3.

For efficiency, the default publication mechanism specified in the <presenceInfo> element may represent the publication mechanism that is the most common among the multiple subordinate presence attributes represented in document 400. This may limit the number of overriding presenceServiceType attributes that must be specified within the document 400, which may in turn advantageously limit the size of the document.

With the exception of setting the presenceServiceType attribute using the approach described above, the remaining content of XML document 400 may be determined based on the presence attributes that the presentity 14 elects to publish. For example, the XML elements representing presence attribute A1 and presence attribute A2 may be copied from a template or "master" XML document, which contains not only the XML elements representing attributes A1 and A2 but also XML elements representing other presence attributes that are not currently maintained at presentity 14. Should the presence attributes maintained by presentity 14 change in the future, the substance of document 400 may be updated, e.g., by deleting the XML elements pertaining to any presence attributes that are no longer maintained and by copying XML elements pertaining to newly elected presence attributes from the master document. XML document 400 may be stored, for example, on device 20, or at the presence server 12.

It is noted that none of the elements within the XML document 400 have any values. This is consistent with the role of document 400 as a model for the subsequent publication of presence information 18 by presentity 14. As will become apparent, when the presentity publishes its presence information (e.g. upon the occurrence of a change in the presence information), publication is done by way of an XML document that is modelled after XML document 400 but in which the XML elements have values representing current values of presence information 18.

Upon the completion of operation phase I (S210 of FIG. 2), a copy of the document 400, or an update indicative of presence attributes configured by the presentity 14 based on previous configurations (e.g. the master XML version), is communicated to watcher 16, via presence server 12, in order to apprise watcher 16 of the presence information available from presentity 14 as well as the publication mechanism(s) by which it is to be published. It is noted that neither Tom nor Jennifer has yet indicated any desire to receive presence information of the other.

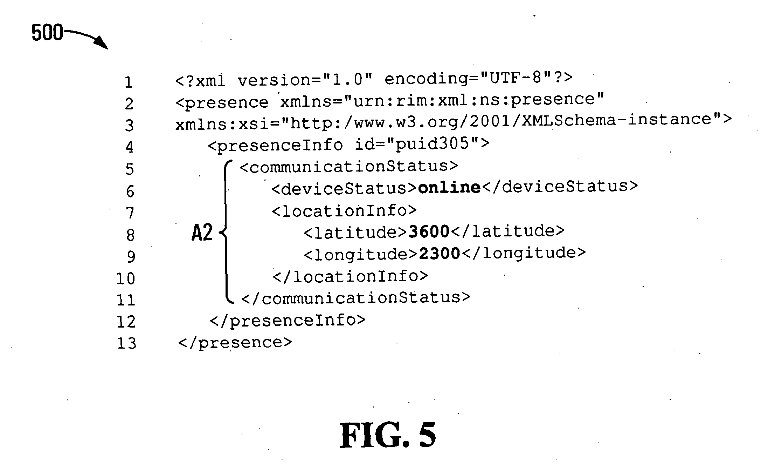

Operation phase II begins when presentity 14 begins publishing only those presence attributes for which the publish/subscribe model has been elected (FIG. 2, S212), i.e. A2. In publishing attribute A2, presentity 14 initially apprises the presence server 12 of the initial value of attribute A2 and thereafter updates the presence server 12, as necessary, upon any change in the value of attribute A2. The communication of presence attribute A2 to presence server 12 in the present embodiment is by way of an XML document 500 (FIG. 5) that is modelled after XML document 400 but which contains XML element values representing the current value of only presence attribute A2. The XML element values are shown in bold text in FIG. 5. The value "online" indicates that the computing device 20 (FIG. 1) is in data communication with the presence server 12, whereas the values "3600" and "2300" convey current location information regarding computing device 20. Notably, no XML elements pertaining to attribute A1 (e.g. <userStatus>-not even XML elements lacking values-are included in document 500, because the operative publication mechanism for that attribute is the request-based model and because no watcher has yet subscribed to that attribute. This omission of XML elements limits the size of document 500, which in turn reduces amount of bandwidth consumed between presentity 14 and presence server 12 at this stage. It is also noted that, because watcher 16 has not yet subscribed to any of the presence information 18 of presentity 14 (whether to attribute A2 or otherwise), the presence server 12 does not relay any part of XML document 500 to watcher 16.

It is assumed that Jennifer now interacts with her presence service client at computing device 24 (FIG. 1) in order to cause watcher 16 to subscribe to both presence attributes A1 and A2 of presentity 14 (FIG. 2, S214). In particular, Jennifer selects the presence attributes of presentity 14 to which watcher 16 shall subscribe. Jennifer's presence service client may prompt Jennifer to do this when she adds Tom to her contact list in, e.g., a communication client (e.g. IM client) with which her presence service client is associated. The presence service client is aware of the presence attributes presently available at presentity 14 by virtue of the XML document 400 earlier received from presentity 14. Jennifer's subscription to both attributes A1 and A2 may be represented at computing device 24 by an XML document having a format that is similar to XML document 400, with the exception that the presenceServiceType attribute may be omitted. Had Jennifer not subscribed to one of the presence attributes, that presence attribute would not have been represented in that XML document.

Thereafter, the presence attributes elected by Jennifer are communicated to the presence server 12 (S216). This may occur automatically after Jennifer has confirmed her selections in S214, for example. When presence server 12 receives the communication (S216), two actions are triggered.

First, for all of the selected presence attributes of presentity 14 that were earlier configured for publishing according to the publish/subscribe model (in S210), a communication is immediately sent from presence server 12 back to watcher 16 to convey the current value of those presence attributes (as most recently received from presentity 14). This tends to limit the worst-case latency between a watcher's subscription to the presentity's presence attribute and the watcher's receipt of the current value of that presence attribute. In the present example, the latest value of presence attribute A2 is accordingly communicated from the presence server 12 to watcher 16 (S218). This value may have a format similar to XML document 500 of FIG. 5.

Second, the presence server 12 sends a communication to presentity 14 identifying the presence attributes to which Jennifer has subscribed (S220). In the present embodiment, this communication identifies all the presence attributes to which Jennifer has subscribed, regardless of whether they are to be published according to the publish/subscribe model or the request-based model. This is to ensure that the presentity 14 is made aware of all watchers who have subscribed to any of its presence attributes, regardless of the publication mechanism by which the attributes are published. This information may be of use should presentity 14 later wish to cease publishing any of its presence attributes, in which case the presentity 14 can base its decision of whether or not to do so upon whether any watchers, and/or how many watchers and which ones, would be impacted (alternatively, or in conjunction, presentity 14 may at least notify the impacted watchers before ceasing publication of one or more of its presence attributes). This aspect of the present embodiment, i.e. notifying a presentity of the identity of any watchers who have subscribed to its presence information even in the case where the publish/subscribe model is being used to publish the presence information, is one way in which presence service 10 is distinguishable from conventional presence services.

It is assumed that presentity 14 authorizes (i.e. confirms) the subscription by watcher 16 to presence attribute A1 (i.e. to the presence attribute that is being published according to the request-based model). The authorization may be performed automatically by presentity 14, e.g., merely by virtue of the fact that Jennifer is in Tom's contact list. In other words, one's contact list may represent the users with whom one implicitly agrees to share one's presence information. The authorization is communicated to the presence server 12 (S222), which in turn communicates the authorization to watcher 16 (S224). In the present embodiment, no authorization is required for presence attribute A2 because it is being published according to the publish/subscribe model. In some embodiments, authorization for presence attributes published according to the publish/subscribe model may be automatically provided by the presence server 12 based on an earlier pre-configuration of the presence server 12 by presentity 14 with the identity of a group of watchers for which authorization should be automatically provided.

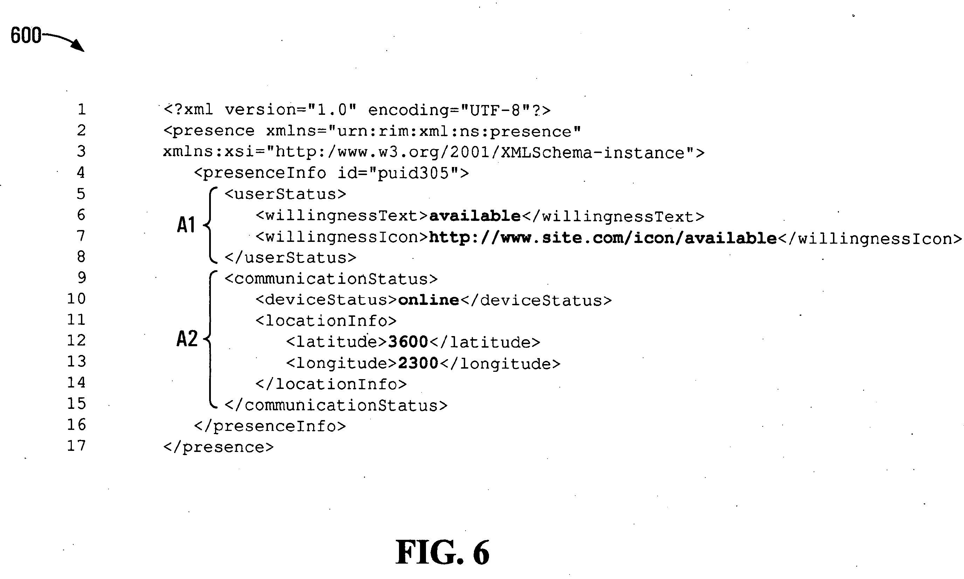

Now that at least one subscriber has subscribed to presence attribute A1, presentity 14 begins publishing that presence attribute (FIG. 2, S226) in addition to any presence attributes that are already being published according to the publish/subscribe model (i.e. in addition to attribute A2). It will be appreciated that the publishing of attribute A1 according to the request-based model and the publishing of attribute A2 according to the publish-subscribe model both occur during the same connection of presentity 14 with presence service 10 (e.g. during a single "IM session"). The communication of presence attributes A1 and A2 to presence server 12 in the present embodiment is by way of an XML document 600 (FIG. 6) that is modelled after XML document 400 but which includes current values for both presence attributes A1 and A2 (in some embodiments, current values for A2 may be omitted if it has not changed since last being published, so as to consider bandwidth between presentity 14 and presence server 12). The bold element values at lines 6 and 7 of FIG. 6 represent the current value of presence attribute A1. When the presence server 12 receives document 600, it relays it to watcher 16 (S228). If another watcher had existed in presence service 10 that had only subscribed to attribute A1, the presence server 12 would have sent to that watcher a document similar to document 600, but with lines 9-15 being removed.

The presence service 10 now enters a stage of operation in which presence information 18 is published, as described above in conjunction with operation S226 and S228, whenever either of presence attributes A1 or A2 changes. This stage is represented in FIG. 2 as S230 and may continue for virtually any duration.

At a later point in time, Jennifer interacts with her presence service client at computing device 24 in order to cause watcher 16 to unsubscribe to both presence attributes A1 and A2 of presentity 14 (FIG. 2, S232). This is communicated to the presence server 12 (S234) and relayed to presentity 14 (S236). At this stage, there are no longer any watchers subscribed to either of presence attributes A1 or A2. As a result, the presentity 14 ceases publishing attribute A1 (S238) that was being published according to the request-based model, but continues publishing attribute A2 that was being published according to the publish/subscribe model. The continued periodic publication of attribute A2 over time is represented at S240 of FIG. 2. Operation of phase II is thus concluded.

In some embodiments, in place of continued publication in the absence of any real watchers (as at S240, or if no watchers are presently connected to presence service 10), presentity 14 may refrain from publishing presence updates to the presence server 12 even for presence attributes for which the publish/subscribe model was specified. This may be done to avoid unnecessary bandwidth consumption between presentity 14 and presence server 12. Of course, if watchers frequently change their connection status from connected to disconnected and vice-versa, the presence server 12 and presentity 14 may disadvantageously have significant overhead in monitoring the statuses of the watchers and activating/deactivating presence information publishing.

It will be appreciated that, in the present embodiment, each presentity can be configured to publish its presence information independent from every other presentity. Thus Jennifer could configure her presentity (not shown) to publish presence information differently from the manner in which presentity 14 publishes its presence information.

As should now be appreciated, the capacity of each presentity to select the publication mechanism for its presence information on an attribute-by-attribute basis promotes certain efficiencies within the presence service 10. However, the determination of which publication mechanism is most efficient for a particular presence attribute or a particular presence service may be situation-specific.

For example, if a presentity has a presence attribute that either requires much bandwidth to communicate (e.g. an avatar), changes frequently, or both, then the request-based model may be preferred for that presence attribute. The reason is that the size of the presence attribute and/or the high frequency of its changes is such that, when the presentity publishes updates to a presence server, significant bandwidth may be consumed between the presentity and the presence server. In the request-based model, publishing is only done if at least one watcher has subscribed to the attribute, thus bandwidth is not wasted when no watchers have subscribed to the attribute.

Alternatively, if it is important for the worst-case latency between a watcher's subscription to a presence attribute of a presentity and its receipt of the current value of that presence attribute to be minimal, then the publish/subscribe model may be preferred for that attribute.

For clarity, it is noted that some of the above-noted efficiency advantages may not be immediately apparent from the perspective of a watcher in an exemplary presence service. For example, the watcher may not be able to detect any improved efficiencies in the utilization of the network(s) between a presentity and a presence server in the form of a change in behaviour of his presence service client. Other advantages may however be more apparent. For example, the watcher may be able to detect the low latency between its subscription to a presence attribute and its receipt of the current value of that presence attribute, when the attribute is published according to the publish/subscribe model versus the request based model, and when the watcher is the first subscriber to that attribute.

It should be appreciated that presentity 14 could be configured so that each presence attribute is published according to the publish/subscribe model or so that each presence attribute is published according to the request-based model, in addition to the above-described "hybrid" combination of both publishing mechanisms. This provides flexibility for adopting whatever publishing mechanism(s) is/are most efficient or suitable for the presence service or presence information in question.

As will be appreciated by those skilled in the art, modifications can be made to the above-described embodiment without departing from the essence of the invention as defined by the claims. For example, computing devices 20, 24 described above as wireless communication devices. In alternative embodiments, the computing devices could be any type of computing device capable of operating as described herein, including, without limitation, personal computers, workstations, web appliances, or the like. The devices need not be wireless or portable in all embodiments.

It should also be appreciate that above-described embodiment may be associated with a communication system other than an instant messaging system or VoIP system, such as a two-way paging system, push-to-talk system, group chat system or content sharing system for example.

In another alternative, configuration of the publication mechanism for presence attributes comprising the presence information of a presentity may not be performed by the presence user of that presentity. The configuration could be performed by a system administrator of the presence service or wireless service provider for example. The configuration of individual presentities may be automatic and centrally administered to be consistent from presentity to presentity.

In some embodiments, the communication S220 is limited to identifying only the presence attributes to which Jennifer has subscribed which the presentity 14 is publishing using the request-based model. The reason for this limitation is that presentity 14 may not need to authorize watcher subscriptions to presence attributes that are being published according to the publish/subscribe model in those embodiments. This limitation may advantageously reduce bandwidth usage between presence server 12 and presentity 14. The latter advantage may however come at the cost of restricting the ability of presentity 14 of being able to identify or apprise impacted watchers in the event that presentity 14 wishes to cease publishing a presence attribute that is being published according to the publish/subscribe model.

In some embodiments, the presentity 14 may grant presence server 12 the authority to authorize watcher subscriptions to some or all of the presentity's presence attributes on its behalf. This grant of authority may for example be effected through a presence service client configuration setting elected by Tom or the presence service provider. In such embodiments, the presence server 12 can authorize to watcher subscription requests during operation phase II without having to consult presentity 14. This may be referred to as "proactive authorization", as distinguished from "reactive authorization" in which the presentity itself provides the authorization.

In some embodiments, the presence server stores an XML document like document 400 for each presentity in the service, rather than having the watcher maintain an XML document like document 400 for each presentity in the service. Thus two types of presence attribute configurations may be maintained by the server: a publication presence attribute configuration for each presentity in the presence service and a notification presence attribute configuration for each watcher in the presence service.

Other modifications will be apparent to those skilled in the art and, therefore, the invention is defmed in the claims.

### APPENDIX A

| **Type** | **Description** | **Possible Values** | |
|---|---|---|---|
| Activity_t | What the person is currently doing. A person can be engaged in multiple activities at the same time. | e.g. meeting / on-the-phone / shopping / sleeping / presentation / etc. | |
| Address_t | The location (address) of the person. | | |
| Alias_t | A short text with the alias of the person. | | |
| BearerCapabilities_t | It is correlated with other service attributes, such as communication type, contact address. Usually, this attribute is a container that contains such that attributes | | |
| Class_t | The class of the service, device or person. The naming of classes is left to the presentity. | | |
| Contact_Address_t | This is used to invoke the specific service. It is also used for a contact address of a person. | e.g. IM address / phone number/ SMS address / email address / MMS address / etc. | |
| DeviceManufacturer t | The device manufacturer. | | |
| DeviceModel t | The device model. | | |
| DeviceType_t COMPUTER | The device type. | MOBILE_PHONE / / PDA / CLI / OTHER | |
| Geo-location_t | The presentity's or the device's geographical location based on device-derived location (GPS¹) or network-derived location. | | |
| Hobbies_t | A free text form of the hobbies of the person | e.g. football, fishing, computing, dancing, etc. | |
| Icon_t | An image (icon) represents status of the person or service. | URI pointing to an image (icon) | |
| ID_t | Unique identifier of the person, service and/or device. It is highly desirable that it be persistent across time, globally unique, and computable in a fashion so that different systems are likely to refer to the data model² using the same Id. | | |
| Info_Link_t | A set or URLs that the person has selected as extra information. The extra information can be any content type. | URL to the extra information | |
| InfoLinkDesc_t | A free text form of the link. | | |
| InfoLinkContentType_t | MIME type of the document referred to the link. | | |
| Language_t | The preferred language for the person. It is also used for the language setting of the service or device. | e.g. English/Spanish | |
| Location_t | Location where the presentity physically resides at that point in time. | e.g. aircraft / airport / arena / automobile / bank | |
| LocationDesc_t | Free text form of the user location. | | |
| Mood_t³ | The mood of the person. The value of the mood consists of one or more enumerated values. | e.g. afraid/ confused/ happy/ angry/sad/ etc. | SIMPLE (RPID), OMA SIMPLE, OMA IMPS |
| NetworkAvailability_t | A device can be connected to one or more networks, such as GSM, CDMA, CPRS, WiFi. This attribute is defined in a generic way. Each network that needs to be supported needs to extend this attribute in order to stipulate the details. | | |
| NetworkName_t | The PLMN name or the mobile network code. | | |
| Note_t | Additional information. It is also called as description. | | |
| Preference_t | A property for a client specifies whether the person, at that point in time, is willing to receive communication of that type. It can also be considered as user-willingness but it also has order. It is derived from ServiceType t. | CALL / SMS / MMS / IM / EMAIL | |
| Priority_t | A relative priority of the contact, mostly service for a person, over the others (compared services). | e.g. a decimal number between 0 and 1 inclusive with at most 3 digits after the decimal point, 0, 0.021, 0.5, 1.00 | |
| Registration_t | The registration flag of the device, especially mobile device, in the network. In the case of mobile device, the registration state attribute shows the device coverage state. | T/F | |
| ServiceName_t | Name of the service. | e.g. Instant Messaging | |
| Service_Producer_t | Name of the producer of the service (application). | | |
| ServiceType_t | The service type. It is also called as communication type. | CALL / SMS / MMS / IM / EMAIL | |
| Status_t | The current status or availability status of the person or service. It is also used to indicate whether it is possible to receive an incoming communication request using the specified service and device. not-disturb) | open (available, online, true, in coverage) /closed (not available, offline, false, out of coverage) | PIDF, IETF SIMPLE, IMS Presence, OMA SIMPLE, OMA IMPS, Blackberry |
| | | away, chat xa⁴ | XMPP |
| | | DnD or discreet (do-not disturb) Willing with limitations / not disclosed recently in coverage⁵, recently out of coverage⁶, in poor coverage⁷ | XMPP, OMA IMPS IMS Presence Blackberry |
| StatusDesc_t | Free text form of the status attribute. | e.g. "in a meeting" | |
| Timestamp_t | The date and time of the availability change for the presentity (data component). The watcher may use this information to compare information provided in the presentities. | | |
| Timezone_t | The number of minutes of offset from UTC at the data component's current location. A positive number indicates that the local time-of-day is ahead Universal Time, while a negative number indicates that the local time-of-day is behind Universal Time. | positive number / 0 / negative number | SIMPLE (RPID), OMA SIMPLE |
| | | e.g. +200 or simply +02 | OMA IMPS |
| | | picture: smiley face / frowning face/ etc. | |
| Version_t | The version of the service. | | |
| Willingness_t | A property of the person, service or device denoting its ability and willingness to share information with other users. The attribute indicates whether the user of the specified communication service desires to receive incoming communication requests for the specified application and device. | willing/not willing | PIDF, OMA SIMPLE, OMA IMPS |

| | | | |
|---|---|---|---|
| ¹ For the wireless networks, GPS is usually used to provide the device-derived location at a mobile device. ²Data model indicates person, service or device ³RPID well defines the enumerated values for the mood attribute. Refer to RPID. ⁴"xa" indicates extended away. ⁵ *recently in coverage* means that it was in coverage in the last X minutes (e.g X=30). ⁵ *recently out of coverage* means that it was out of coverage in the last Y minutes (e.g. Y=30) ⁷*in poor coverage* means that it has changed coverage state Z+ times within the last AA min. (e.g. Z= 3 and A=30). | | | |

## Claims

1. A method of publishing presence information (18) of a presentity (14) within a presence service (10), said presence information (18) comprising a first presence attribute (A1) and a second presence attribute (A2), the method comprising:
publishing (S226) the first presence attribute (A1) within the presence service (10) only if at least one watcher (16) within the presence service (10) has subscribed to
the first presence attribute (A1); and
further publishing (S212) the second presence attribute (A2) within the presence service (10) regardless of whether any watcher (16) within the presence service (10) has subscribed to the second presence attribute (A2),
said publishing (S226) and said further publishing (S212) both occurring during a connection of said presentity (14) with said presence service (10).

2. The method of claim 1 wherein said publishing (S226) occurs upon detection of a change to the first presence attribute (A1) and wherein said further publishing (S212) occurs upon detection of a change to the second presence attribute (A2).

3. The method of claim 1 or claim 2 wherein said presence service (10) comprises a presence server (12) and wherein said publishing (S226) and said further publishing (S212) comprise sending a notification from said presentity (14) to said presence server (12).

4. The method of claim 3 wherein said notification comprises a markup language document (500, 600).

5. The method of any one of claims 1 to 4 further comprising:
prior to said publishing (S226) and further publishing (S212), displaying a user interface (300) comprising:
for each said presence attribute (A1, A2) comprising said presence information (18) of said presentity (14) within said presence service (10), a user interface control (310, 320) permitting selection of the publication mechanism for that presence attribute (A1, A2) within the presence service (10), said user interface control (310, 320) having a plurality of options, said options comprising:
a first option (312, 322) for causing the presence attribute to be published only if at least one watcher (16) within the presence service (10) has subscribed to the presence attribute; and
a second option (314, 324) for causing the presence attribute to be published regardless of whether any watcher (16) within the presence
service (10) has subscribed to the presence attribute; and
receiving a user selection of said first option (312) of said user interface control (310) for said first presence attribute (A1) and of said second option (324) of said user interface control (320) for said second presence attribute (A2),
wherein said publishing (S226) of the first presence attribute (A1) and said further publishing (S212) of the second presence attribute (A2) is based on said user selection.

6. A machine-readable medium (30) storing instructions which, when executed by a processor of a computing device (20), cause said computing device (20) to perform all the steps of the method of any one of claims 1 to 5.

7. A computing device (20) comprising:
a processor; and
memory storing executable instructions which when executed by said processor, adapt said computing device (20) to perform all the steps of the method of any one of claims 1 to 5.

## Patentansprüche

1. Verfahren zur Ausgabe von Präsenzinformation (18) einer Präsentität (14) innerhalb eines Präsenzdienstes (10), wobei die Präsenzinformation (18) ein erstes Präsenzattribut (A1) und ein zweites Präsenzattribut (A2) aufweist und das Verfahren folgendes umfasst:
Ausgeben (S226) des ersten Präsenzattributs (A1) innerhalb des Präsenzdienstes (10) nur dann, wenn zumindest ein Beobachter (16) innerhalb des Präsenzdienstes (10) für das erste Präsenzattribut (A1) eingetragen ist; und
weiterhin Ausgeben (S212) des zweiten Präsenzattributs (A2) innerhalb des Präsenzdienstes (10), ungeachtet dessen, ob irgendein Beobachter (16) innerhalb des Präsenzdienstes (10) für das zweite Präsenzattribut (A2) eingetragen ist, wobei sowohl das Ausgeben (S226) als auch das weitere Ausgeben (S212) während einer Verbindung der Präsentität (14) mit dem Präsenzdienst (10) erfolgen.

2. Verfahren nach Anspruch 1, wobei das Ausgeben (S226) bei Erfassung einer Änderung an dem ersten Präsenzattribut (A1) erfolgt und wobei das weitere Ausgeben (S212) bei Erfassung einer Änderung an dem zweiten Präsenzattribut (A2) erfolgt.

3. Verfahren nach Anspruch 1 oder Anspruch 2, wobei der Präsenzdienst (10) einen Präsenzserver (12) umfasst und wobei das Ausgeben (S226) und das weitere Ausgeben (S212) das Senden einer Mitteilung von der Präsentität (14) an den Präsenzserver (12) umfassen.

4. Verfahren nach Anspruch 3, wobei die Mitteilung ein Auszeichnungssprachendokument (500, 600) umfasst.

5. Verfahren nach irgendeinem der Ansprüche 1 bis 4, weiterhin mit:
Anzeigen einer Benutzerschnittstelle (300) vor dem Ausgeben (S226) und weiteren Ausgeben (S212), mit:
einer Benutzerschnittstellensteuerung (310, 320) für jedes Präsenzattribut (A1, A2) mit der Präsenzinformation (18) der Präsentität (14) innerhalb des Präsenzdienstes, welche Benutzerschnittstellensteuerung die Auswahl des Ausgabemechanismus für jenes Präsenzattribut (A1, A2) innerhalb des Präsenzdienstes (10) gestattet, wobei die Benutzerschnittstellensteuerung (310, 320) mehrere Optionen aufweist, welche folgendes umfassen:
eine erste Option (312, 322) zum Veranlassen, dass das Präsenzattribut nur dann ausgegeben wird, wenn zumindest ein Beobachter (16) innerhalb des Präsenzdienstes (10) für das Präsenzattribut eingetragen ist; und
eine zweite Option (314, 324) zum Veranlassen, dass das Präsenzattribut ausgegeben wird, ungeachtet dessen, ob irgendein Beobachter (16) innerhalb des Präsenzdienstes (10) für das Präsenzattribut eingetragen ist; und
Empfangen einer Benutzerauswahl der ersten Option (312) der Benutzerschnittstellensteuerung (310) für das erste Präsenzattribut (A1) und der zweiten Option (324) der Benutzerschnittstellensteuerung (320) für das zweite Präsenzattribut (A2),
wobei das Ausgeben (S226) des ersten Präsenzattributs (A1) und das weitere Ausgeben (S212) des zweiten Präsenzattributs (A2) auf der Benutzerauswahl beruhen.

6. Maschinenlesbares Medium (30), das Anweisungen speichert, die, wenn sie von einem Prozessor einer Computereinrichtung (20) ausgeführt werden, die Computereinrichtung (20) veranlassen, alle Schritte des Verfahrens nach irgendeinem der Ansprüche 1 bis 5 durchzuführen.

7. Computereinrichtung (20) mit:
einem Prozessor; und
einem Speicher, der ausführbare Anweisungen speichert, die, wenn sie von dem Prozessor ausgeführt werden, die Computereinrichtung (20) dazu anpassen, alle Schritte des Verfahrens nach irgendeinem der Ansprüche 1 bis 5 durchzuführen.

## Revendications

1. Procédé de publication d'informations de présence (18) d'une entité de présence (14) dans le cadre d'un service de présence (10), lesdites informations de présence (18) comprenant un premier attribut de présence (A1) et un second attribut de présence (A2), le procédé comprenant les étapes consistant à :
publier (S226) le premier attribut de présence (A1) dans le cadre du service de présence (10) seulement si au moins un observateur (16), au sein du service de présence (10), s'est abonné au premier attribut de présence (A1) ; et
publier complémentairement (S212) le second attribut de présence (A2) au sein du service de présence (10) sans tenir compte du fait qu'un observateur (16), au sein du service de présence (10), s'est abonné ou non au second attribut de présence (A2) ;
ladite publication (S226) et la dite publication complémentaire (S212) se produisant toutes deux pendant une connexion de ladite entité de présence (14) avec ledit service de présence (10).

2. Procédé selon la revendication 1, dans lequel ladite publication (S226) se produit après détection d'un changement du premier attribut de présence (A1) et dans lequel ladite publication complémentaire (S212) se produit après détection d'un changement du second attribut de présence (A2).

3. Procédé selon la revendication 1 ou 2, dans lequel ledit service de présence (10) comprend un serveur de présence (12) et dans lequel ladite publication (S226) et ladite publication complémentaire (S212) comprennent l'envoi d'une notification par ladite entité de présence (14) audit serveur de présence (12).

4. Procédé selon la revendication 3, dans lequel ladite notification comprend un document en langage de balisage (500, 600).

5. Procédé selon l'une quelconque des revendications 1 à 4, comprenant en outre les étapes consistant à :
avant ladite publication (S226) et ladite publication complémentaire (S212), afficher une interface utilisateur (300) comprenant :
pour chacun desdits attributs de présence (A1, A2) constituant lesdites informations de présence (18) de ladite entité de présence (14) au sein dudit service de présence (10), un élément de commande de l'interface utilisateur (310, 320) permettant de sélectionner le mécanisme de publication pour cet attribut de présence (A1, A2) au sein du service de présence (10), l'élément de commande de l'interface utilisateur (310, 320) ayant une pluralité d'options, lesdites options comprenant :
une première option (312, 322) destinée à commander que l'attribut de présence soit publié uniquement si au moins un observateur (16), au sein du service de présence (10), s'est abonné à l'attribut de présence ; et
une seconde option (314, 324) destinée à commander que l'attribut de présence soit publié qu'il y ait ou non un observateur (16), au sein du service de présence (10), qui s'est abonné à l'attribut de présence ; et
recevoir une sélection par l'utilisateur de ladite première option (312) dudit élément de commande de l'interface utilisateur (310) pour ledit premier attribut de présence (A1) et de ladite seconde option (324) dudit élément de commande de l'interface utilisateur (320) pour ledit second attribut de présence (A2) ;
dans lequel ladite publication (S226) du premier attribut de présence (A1) et ladite publication complémentaire (S212) du second attribut de présence (A2) sont fondées sur ladite sélection par l'utilisateur.

6. Support lisible par la machine (30), stockant des instructions qui, lorsqu'elles sont exécutées par un processeur d'un dispositif informatique (20), commandent audit dispositif informatique (20) d'exécuter toutes les étapes du procédé selon l'une quelconque des revendications 1 à 5.

7. Dispositif informatique (20) comprenant :
un processeur ; et
une mémoire stockant des instructions exécutables qui, lorsqu'elles sont exécutées par ledit processeur, adaptent ledit dispositif informatique (20) afin d'exécuter toutes les étapes du procédé selon l'une quelconque des revendications 1 à 5.
